# EUROPEAN PATENT SPECIFICATION

(11) **EP 2 825 857 B1**
(45) Date of publication and mention of the grant of the patent: **10.02.2016**
(21) Application number: 12708545.4
(22) Date of filing: 14.03.2012
(51) Int. Cl.: G01J 3/18, G01J 3/28

(54) **DISPERSION SPECTROMETER**
DISPERSIONSSPEKTROMETER
SPECTROMÈTRE À DISPERSION

(43) Date of publication of application: 21.01.2015
(73) Proprietor: FOSS Analytical AB, 26321 Höganäs (SE)
(72) Inventor: WIHLBORG, Nils, S-252 38 Helsingborg (SE)
(86) International application number: PCT/EP2012/054441
(87) International publication number: WO 2013/135281

(56) References cited:
- EP-A1- 1 882 916
- EP-A2- 0 121 714
- JP-A- 1 250 737

## Description

The present invention relates to a dispersion type spectrometer and in particular to a spectrometer having an addressable array of detection elements.

Dispersion type spectrometers are well known in the art and are typically employed in the investigation of material properties through monitoring wavelength dependent intensity variations of radiant energy after its interaction with the material. These spectrometers generally comprise a wavelength dispersive element located within a path of incoming radiant energy and a detector disposed to detect incoming radiant energy dispersed by the dispersive element. Examples of these spectrometers can be found in EP0121714, EP1882916 and JP01250737.

Depending on the intended application of the spectrometer the incoming radiant energy will consist of some or the entire portion of the electromagnetic spectrum from and including ultra-violet to and including the infra-red and radiant energy will be used throughout this document as referring to this.

The dispersive element typically is a static or movable diffraction grating which itself may be either a transmission grating or a reflection grating.

The detector may be any light sensitive detector know to be employed in such spectrometers and may be, for example, a photomultiplier tube, a photo-sensitive semi-conductor device, an addressable array of detection elements such as a photo-diode array, for example a CMOS or NMOS array, or a charge coupled device. A common feature with all these detectors is that they have operational parameters (integration time and/or sensitivity gain) which are adjustable to change characteristics of the output signal of the detector which is generated in response to the detected radiant energy.

The above mentioned operational parameters often need to be adjusted during the operation of the spectrometer in order to correct for changes in intensity of incoming radiant energy due to variations in the material being investigated using the spectrometer. Whether manually or by automation, the known adjustment procedure generally follows a recursive algorithm by which the parameter being adjusted is varied stepwise by a known amount, a measurement made on the material, the signal at the detector monitored and a decision whether or not to continue the adjustment is made based on the signal. This may be repeated many times until a desired signal characteristic (typically the signal to noise ratio 'S/N') is achieved.

A problem with this known adjustment procedure is that during the procedure no investigations may be performed. This is a particular problem when the material being investigated is moving, either the movement should be halted or amounts, often substantial amounts of material, will not be investigated. An additional problem with this 'trial and error' approach is that the detector may become inadvertently saturated which results in a certain recovery time then being needed in order to have the detector revert to a usable state before the adjustment procedure can be continued. This is a particular problem in addressable array type detectors where 'blooming' occurs when the charge in a pixel of the array exceeds the saturation level and the charge starts to fill adjacent pixels. Another problem occurs when the intensity of incoming radiant energy is relatively low, the intensity of the dispersed energy is correspondingly even lower which leads to the necessity of longer integration times and hence larger delays in making investigations.

It is the aim of the present invention to at least mitigate the above mentioned problems.

Accordingly there is provided a dispersion spectrometer comprising a wavelength dispersive element located within a path of incoming radiant energy; a first detector disposed to detect incoming radiation dispersed by the dispersive element and a second detector configured to register at least a portion of the incoming radiation without dispersion and is configured to generate a signal dependent on the registered intensity which is used in the spectrometer to adjust one or more operational parameters of the first detector. In this manner the first detector is not used in the adjustment procedure and so the possibility of saturating the first detector during the procedure is significantly reduced, even removed. Moreover, since a second detector detects radiant energy before its dispersion and onward propagation to the first detector the first detector may be adjusted in substantially 'real-time' thus reducing the time the spectrometer unavailable for making measurements during its operation. Additionally, the measurement before dispersion provides a substantially larger intensity of radiant energy at the second detector than at the first, improving the sensitivity and speed of these control measurements compared with the post-dispersion measurements employed in the known spectrometers.

These and other advantages of the present invention will become apparent from a consideration of the following description of an exemplary embodiment which is made in connection with the drawings of the following figures of which:

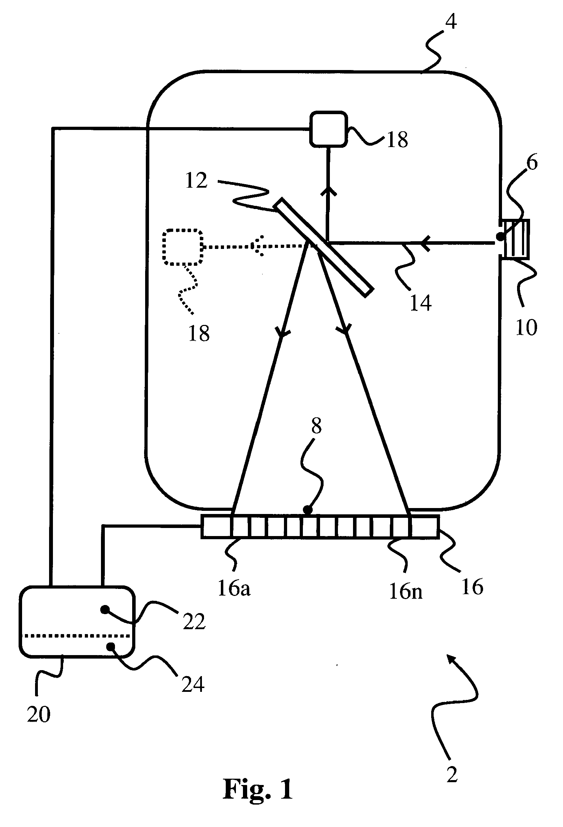

Fig. 1: shows a schematic partial representation of a spectrometer according to the present invention.

With reference to Fig. 1, elements of a dispersion spectrometer 2 which are relevant to an understanding of the present invention are shown. A housing 4 is provided having an entrance aperture 6 and an exit aperture 8. In the present embodiment the entrance aperture 6 is provided with a coupling 10 (illustrated as a threaded coupling) for connecting the entrance aperture 6 to a fiber-optic (not shown) for providing radiant energy at the entrance aperture 6.

A dispersive element, here in the form of a fixed transmission grating 12, is disposed in the path (illustrated by arrowed line 14) of incoming radiant energy through the housing 4. A first detector is coupled to the exit aperture 8 in order to detect incoming radiant energy after its wavelength dependent dispersion by the grating 12. A second detector 18 is disposed to register the intensity of the incoming radiant energy before dispersion and to generate an output signal representing this intensity. The second detector 18 is, in the present embodiment, arranged within the housing 4 to register incoming radiant energy which is reflected from the grating 12.

It will be appreciated that according to the well known Fresnel equations the relative amounts of radiant energy reflected and transmitted at the grating 12 will effectively remain constant with change in wavelength for a fixed geometry. In the present embodiment, in which the grating 12 is formed on a glass substrate and is disposed at an angle of 45° to the path of incident radiation 14 from the entrance aperture 6, the reflected portion will be around 10% of the incoming radiant energy. In an alternative arrangement (illustrated by the broken line construction in Fig. 1) the second detector 18 may be disposed to monitor the zero order diffraction signal (i.e. the non-dispersed radiant energy) from the grating 12.

In the present embodiment, and by way of example only, the spectrometer 2 is intended for use in monitoring incoming near infra-red radiation. The first detector 16 is an addressable array, here an individually addressable linear array of NMOS detector elements 16a...16n. Each element, or 'pixel' of the array may be considered to be a separate capacitor which is capable of holding a charge, the size of which is dependent on both the intensity of the incident radiation and on the time for which the charge is allowed to build before the capacitor is discharged. This time may be considered an 'integration time' of the first detector 16. In the present configuration of the spectrometer 2 each element of the array 16a...n is exposed to a different narrow wavelength band of the incoming radiant energy that has been wavelength dispersed by the element 12.

The second detector is an IR detector, such as a silicon detector, which is configured to generate an output signal proportional to the intensity of registered radiant energy, in this example a signal having a frequency that is linearly proportional to the radiance. It will however be appreciated that the selection of first and second detectors depends on the intend use of the spectrometer.

A controller 20 is provided as an element of the spectrometer 2 in operable connection to both the first detector 16 and the second detector 18 to receive input from the second detector 18 and to generate an output in response to this input for control of the operation of the first detector 16, particularly control of the operational parameters associated with the first detector 16 and in the present embodiment the control of the integration time of the detector array 16a...n. It will be appreciated that other embodiments may be configured with a controller 20 adapted to control the gain of a detector 16 based on the input received from the second detector 18 in addition or as an alternative to the integration time.

The controller 20, in the present embodiment, comprises a data processing portion 22 and a memory portion 24 which is accessible by the data processing portion 22 and which holds an algorithm for linking the intensity of the radiant energy registered by the second detector 18 with an intensity dependent desired value of an operating parameter of the first detector 16. This algorithm may, for example, represent a mathematical equation linking the two or may represent a 'look-up' algorithm for data held in the memory portion 24 which represents desired values indexed against intensity values. In the present embodiment the algorithm represents an equation which links the input intensity to a desired integration time in an inverse, linear relationship (the greater the intensity registered at the second detector 16 the smaller the integration time).

The data processing portion 22 is adapted to receive the output from the second detector 18 and extract from this a value representative of the intensity of radiant energy registered by the detector 18. In the present embodiment this may be a value indicative of the frequency of the signal from the detector 18. The data processing portion 22 then operates to apply the algorithm stored in the memory portion 24 to the extracted value in order to determine a desired integration time for the first detector 16 which is then employed in the control of the first detector 16. In the present embodiment a control signal is generated periodically by the controller 20 that is input to the first detector 16 which in turn responds by initiating an discharging (or emptying) of each pixel element of the array 16a...n. The period of generation being set to correspond to the desired integration time as determined in the data processing portion 22 from the registered intensity of the radiant energy as described above.

## Claims

1. A dispersion spectrometer (2) comprising a wavelength dispersive element (12) located within a path (14) of incoming radiant energy; and a first detector (16) disposed to detect incoming radiant energy dispersed by the dispersive element (12) **characterised in that** the spectrometer (2) further comprises a second detector (18) disposed to register the intensity of at least a portion of the incoming radiation without dispersion and configured to generate a signal representative of the registered intensity and **in that** the first detector (16) is adapted to have operational parameters varied in response to the signal.

2. A dispersion spectrometer (2) as claimed in Claim 1 **characterised in that** the first detector (16) is adapted to have varied one or both an integration time or a sensitivity gain of the detector as the operational parameters.

3. A dispersion spectrometer (2) as claimed in Claim 2 **characterised in that** the first detector (16) comprises a photodiode array (16a...n) adapted to have varied the integration time of the array elements (16a...n).

4. A dispersion spectrometer (2) as claimed in Claim 3 **characterised in that** the first detector (16) comprises an NMOS photodiode array.

5. A dispersion spectrometer (2) as claimed in Claim 1 **characterised in that** the dispersive element (12) is a transmission diffraction grating and **in that** the second detector (18) is configured to register a portion of the incoming radiant energy reflected by the dispersive element (12).

6. A dispersion spectrometer (2) as claimed in Claim 1 **characterised in that** the dispersive element (12) is a diffraction grating and **in that** the second detector (18) is configured to register a portion of the zero order diffraction intensity of incoming radiant energy.

7. A dispersion spectrometer (2) as claimed in any preceding claim **characterised in that** it further comprises a controller (20) adapted to receive the signal from the second detector (18) and having an electronic storage (24) holding an algorithm for linking an intensity registered by the second detector (18) with an intensity dependent desired value of at least one operation parameter; and a data processor (20) adapted to apply the algorithm to the received signal to determine the desired value and to generate therefrom a control signal to operate the first detector (16) to have varied the relevant operational parameter to the desired value.

8. A dispersion spectrometer (2) as claimed in Claim 7 **characterised in that** the algorithm held in the electronic storage (24) links the intensity with a desired integration time.

9. A dispersion spectrometer (2) as claimed in Claim 7 **characterised in that** the algorithm held in the electronic storage (24) links the intensity with a desired gain.

## Patentansprüche

1. Ein Dispersionsspektrometer (2), beinhaltend ein wellenlängendispersives Element (12), das sich in einer Bahn (14) von eingehender Strahlungsenergie befindet; und einen ersten Detektor (16), der angeordnet ist, um von dem dispersiven Element (12) dispergierte eingehende Strahlungsenergie zu detektieren, **dadurch gekennzeichnet, dass** das Spektrometer (2) ferner einen zweiten Detektor (18) beinhaltet, der angeordnet ist, um die Intensität mindestens eines Teils der eingehenden Strahlung ohne Dispersion zu erfassen, und konfiguriert ist, um ein Signal zu erzeugen, das repräsentativ ist für die erfasste Intensität, und dass der erste Detektor (16) angepasst ist, damit Betriebsparameter als Reaktion auf das Signal variiert werden.

2. Dispersionsspektrometer (2) gemäß Anspruch 1, **dadurch gekennzeichnet, dass** der erste Detektor (16) angepasst ist, damit eine Integrationszeit und/oder eine Empfindlichkeitsverstärkung des Detektors als die Betriebsparameter variiert werden.

3. Dispersionsspektrometer (2) gemäß Anspruch 2, **dadurch gekennzeichnet, dass** der erste Detektor (16) eine Photodiodenanordnung (16a...n) beinhaltet, die angepasst ist, damit die Integrationszeit der Anordnungselemente (16a...n) variiert wird.

4. Dispersionsspektrometer (2) gemäß Anspruch 3, **dadurch gekennzeichnet, dass** der erste Detektor (16) eine NMOS-Photodiodenanordnung beinhaltet.

5. Dispersionsspektrometer (2) gemäß Anspruch 1, **dadurch gekennzeichnet, dass** das dispersive Element (12) ein Transmissionsbeugungsgitter ist und dass der zweite Detektor (18) konfiguriert ist, um einen Teil der eingehenden Strahlungsenergie, reflektiert von dem dispersiven Element (12), zu erfassen.

6. Dispersionsspektrometer (2) gemäß Anspruch 1, **dadurch gekennzeichnet, dass** das dispersive Element (12) ein Beugungsgitter ist und dass der zweite Detektor (18) konfiguriert ist, um einen Teil der Intensität der eingehenden Strahlungsenergie bei Beugung nullter Ordnung zu erfassen.

7. Dispersionsspektrometer (2) gemäß einem der vorhergehenden Ansprüche, **dadurch gekennzeichnet, dass** es ferner Folgendes beinhaltet: eine Steuereinheit (20), die zum Empfangen des Signals von dem zweiten Detektor (18) angepasst ist und einen elektronischen Speicher (24) aufweist, der einen Algorithmus zum Verknüpfen einer von dem zweiten Detektor (18) erfassten Intensität mit einem intensitätsabhängigen gewünschten Wert mindestens eines Betriebsparameters hält; und einen Datenprozessor (20), der angepasst ist, um den Algorithmus auf das empfangene Signal anzuwenden, um den gewünschten Wert zu bestimmen und um daraus ein Steuersignal zu erzeugen, um den ersten Detektor (16) zu betreiben, damit der relevante Betriebsparameter auf den gewünschten Wert variiert wird.

8. Dispersionsspektrometer (2) gemäß Anspruch 7, **dadurch gekennzeichnet, dass** der in dem elektronischen Speicher (24) gehaltene Algorithmus die Intensität mit einer gewünschten Integrationszeit verknüpft.

9. Dispersionsspektrometer (2) gemäß Anspruch 7, **dadurch gekennzeichnet, dass** der in dem elektronischen Speicher (24) gehaltene Algorithmus die Intensität mit einer gewünschten Verstärkung verknüpft.

## Revendications

1. Un spectromètre à dispersion (2) comprenant un élément dispersif en longueur d'onde (12) situé dans une trajectoire (14) d'énergie rayonnante entrante ; et un premier détecteur (16) disposé afin de détecter de l'énergie rayonnante entrante dispersée par l'élément dispersif (12) **caractérisé en ce que** le spectromètre (2) comprend en sus un deuxième détecteur (18) disposé afin d'enregistrer l'intensité d'au moins une portion du rayonnement entrant sans dispersion et configuré afin de générer un signal représentatif de l'intensité enregistrée et **en ce que** le premier détecteur (16) est conçu pour faire varier des paramètres fonctionnels en réponse au signal.

2. Un spectromètre à dispersion (2) tel que revendiqué dans la revendication 1 **caractérisé en ce que** le premier détecteur (16) est conçu pour faire varier l'un ou l'autre ou l'un et l'autre d'un temps d'intégration et d'un gain de sensibilité du détecteur comme paramètres fonctionnels.

3. Un spectromètre à dispersion (2) tel que revendiqué dans la revendication 2 **caractérisé en ce que** le premier détecteur (16) comprend une barrette de photodiodes (16a...n) conçue pour faire varier le temps d'intégration des éléments de la barrette (16a....n).

4. Un spectromètre à dispersion (2) tel que revendiqué dans la revendication 3 **caractérisé en ce que** le premier détecteur (16) comprend une barrette de photodiodes NMOS.

5. Un spectromètre à dispersion (2) tel que revendiqué dans la revendication 1 **caractérisé en ce que** l'élément dispersif (12) est un réseau de diffraction par transmission et **en ce que** le deuxième détecteur (18) est configuré pour enregistrer une portion de l'énergie rayonnante entrante réfléchie par l'élément dispersif (12).

6. Un spectromètre à dispersion (2) tel que revendiqué dans la revendication 1 **caractérisé en ce que** l'élément dispersif (12) est un réseau de diffraction et **en ce que** le deuxième détecteur (18) est configuré pour enregistrer une portion de l'intensité de diffraction d'ordre zéro d'énergie rayonnante entrante.

7. Un spectromètre à dispersion (2) tel que revendiqué dans n'importe quelle revendication précédente **caractérisé en ce qu'**il comprend en sus un contrôleur (20) conçu pour recevoir le signal provenant du deuxième détecteur (18) et ayant une mémoire électronique (24) contenant un algorithme pour lier une intensité enregistrée par le deuxième détecteur (18) à une valeur souhaitée dépendante de l'intensité d'au moins un paramètre de fonctionnement ; et un processeur de données (20) conçu pour appliquer l'algorithme au signal reçu afin de déterminer la valeur souhaitée et afin de générer à partir de là un signal de contrôle pour faire fonctionner le premier détecteur (16) afin de faire varier le paramètre fonctionnel pertinent jusqu'à la valeur souhaitée.

8. Un spectromètre à dispersion (2) tel que revendiqué dans la revendication 7 **caractérisé en ce que** l'algorithme contenu dans la mémoire électronique (24) lie l'intensité à un temps d'intégration souhaité.

9. Un spectromètre à dispersion (2) tel que revendiqué dans la revendication 7 **caractérisé en ce que** l'algorithme contenu dans la mémoire électronique (24) lie l'intensité à un gain souhaité.
